# FASCICULE DE BREVET EUROPEEN

(11) **EP 3 330 934 B1**
(45) Date de publication et mention de la délivrance du brevet: **26.02.2020**
(21) Numéro de dépôt: 17204165.9
(22) Date de dépôt: 28.11.2017
(51) Int. Cl.: G07F 19/00, G06Q 20/18, G06Q 20/20, G07F 9/02, G07F 11/00, G07F 11/72, G07F 17/24, G07F 17/42, G06Q 20/40, G07F 9/00

(54) **SYSTÈME ET PROCÉDÉ DE SÉCURISATION D'AU MOINS UN ÉLÉMENT D'UNE BORNE TRANSACTIONNELLE NON SURVEILLÉE**
SYSTEM UND VERFAHREN ZUR SICHERUNG MINDESTENS EINES ELEMENTS EINER NICHT ÜBERWACHTEN SERVICESÄULE
SYSTEM AND METHOD FOR SECURING AT LEAST ONE ELEMENT OF AN UNATTENDED TRANSACTION TERMINAL

(30) Priorité: 01.12.2016 FR 1661799
(43) Date de publication de la demande: 06.06.2018
(73) Titulaire: INGENICO GROUP, 75015 Paris (FR)
(72) Inventeur: PAVAGEAU, Stéphane, 26600 La Roche de Glun (FR); DEVORNIQUE, Roger, 26000 Valence (FR)
(74) Mandataire: Vidon Brevets & Stratégie

(56) Documents cités:
- JP-A- 2007 279 877
- KR-A- 20090 107 693
- US-A1- 2012 038 773

## Description

### Domaine de l'invention

L'invention se rapporte au domaine des terminaux de paiement, dits non surveillés (appelés en anglais « unattended »), comme par exemple des bornes de paiement pour parking, stationnement, pour acheter des titres de transport ou des places de spectacle, des distributeurs de boissons ou friandises ..., et des distributeurs de billets, non surveillés également.

Plus particulièrement, l'invention se rapporte à la sécurisation des claviers et lecteurs de carte de tels dispositifs, appelés par la suite, pour une lecture plus aisée, « bornes transactionnelles non surveillées ».

### Art Antérieur

Actuellement, ce type de bornes transactionnelles non surveillées fait l'objet d'une attaque connue consistant à déposer, par collage par exemple, par-dessus un clavier ou un lecteur de cartes existant, un clavier/lecteur de cartes factice permettant d'espionner le code saisi par un utilisateur sur le clavier, à son insu, ou les données de la carte insérée dans le lecteur (données de la puce ou de la piste magnétique de la carte).

Ce type d'attaque peut ne modifier en rien, pour l'utilisateur, le déroulement de la transaction, car les données sensibles sont espionnées de manière électronique, via le clavier factice ou le lecteur de carte factice collé(s) par un tiers malintentionné, mais elles peuvent être traitées « normalement » pour effectuer la transaction. En effet, dans le cas d'un clavier factice, les appuis touches effectués par l'utilisateur pour saisir son code confidentiel sont interceptés par le clavier factice mais validés quand même par le clavier authentique, le clavier factice permettant de répercuter l'effort mécanique sur le clavier authentique. Il est donc difficile, pour un utilisateur (qu'il soit expérimenté ou novice) de s'assurer que la borne transactionnelle non surveillée qu'il s'apprête à utiliser est authentique ou non.

Des techniques pour tenter d'empêcher la mise en œuvre de ce type d'attaques ont été développées, par exemple en modifiant l'aspect extérieur du clavier pour rendre plus difficile le collage d'un clavier factice par-dessus. Certains claviers authentiques présentent donc par exemple une face avant non lisse (par exemple avec des nervures et/ou des vaguelettes et/ou des embossages). Des techniques similaires peuvent également être utilisées pour les lecteurs de carte.

Ces techniques présentent cependant des inconvénients, comme par exemple l'augmentation du coût des claviers/lecteurs de carte authentiques pour qu'ils présentent des formes complexes, et le fait qu'avec l'émergence des imprimantes 3D, ces formes complexes deviennent de plus en plus faciles à reproduire.

Une autre technique existe pour tenter cette fois-ci de détecter ce type d'attaque sur un lecteur de carte, par modification de la couleur de la face affleurante du lecteur. Par exemple, un lecteur de carte présentant une ouverture d'un vert transparent peut être identifié comme probablement authentique. En revanche, cette technique étant connue, les fraudeurs peuvent également mettre en œuvre des lecteurs de carte factices présentant un aspect visuel très similaire à celui des lecteurs « classiques », rendant plus difficile la détection par un utilisateur.

Le document KR 2009 0107693 A divulgue l'utilisation d'un rétroéclairage couleur à DEL pour détecter la présence d'appareils « espions » dans les guichets automatiques. Il est demandé à l'utilisateur de confirmer que la couleur choisie au hasard sur le lecteur de carte correspond bel et bien à la couleur affichée sur l'écran du guichet automatique. En alternative, des détecteurs optiques peuvent être utilisés pour effectuer une comparaison automatique.

Le document JP 2007 279877 A divulgue également l'utilisation d'un rétroéclairage couleur à DEL pour détecter la présence d'appareils « espions » dans les guichets automatiques. Il est demandé à l'utilisateur de confirmer que la couleur choisie au hasard sur le lecteur de carte correspond à la couleur affichée sur l'écran du guichet.

Il existe donc un besoin pour une solution permettant de répondre à la problématique de sécurisation des claviers et lecteurs de carte des bornes transactionnelles non surveillées contre les attaques du type collage de dispositifs factices par dessus les claviers/lecteurs de carte authentiques, tout en limitant les impacts de coût sur la fabrication des bornes de paiement transactionnelles surveillées authentiques et en ne dégradant pas l'ergonomie pour les utilisateurs.

### Résumé

L'invention concerne un système de sécurisation d'au moins un élément d'une borne transactionnelle non surveillée, dit élément à sécuriser, le système comprenant :
- des moyens de sécurisation du ou des éléments à sécuriser, délivrant au moins un moyen d'interaction avec au moins un utilisateur de la borne transactionnelle non surveillée ;
- des moyens de détection d'une anomalie en fonction du moyen d'interaction.

Ainsi, l'invention propose une solution nouvelle et inventive permettant d'interagir avec un utilisateur d'une borne transactionnelle non surveillée (par exemple pour payer un parking ou une place de stationnement, un billet de transport ou une place de spectacle, une boisson ou une friandise ...) pour détecter une anomalie sur au moins un élément à sécuriser de la borne transactionnelle non surveillée, comme par exemple le clavier ou le lecteur de carte.

Pour ce faire, l'invention, selon ses différents modes de réalisation, prévoit de fournir au moins un moyen d'interaction avec un utilisateur, grâce à des moyens de sécurisation mis en œuvre pour l'élément à sécuriser, puis de tenir compte de ce moyen d'interaction pour détecter ou non une anomalie.

Selon un premier mode de réalisation de l'invention, les moyens de sécurisation comprennent :
- des moyens de commande d'au moins un paramètre de rétro-éclairage d'au moins une partie de l'élément à sécuriser ;
- des moyens d'émission d'au moins un signal portant au moins un message, relatif au paramètre de rétro-éclairage, destiné à être affiché sur un écran de la borne transactionnelle non surveillée, le message correspondant au moyen d'interaction,
et les moyens de détection d'une anomalie délivrent une alerte si aucune réponse au message affiché n'est reçue avant l'expiration d'un temps prédéterminé ou si une réponse reçue au message affiché est négative.

Ainsi, ce premier mode de réalisation permet d'interagir avec un utilisateur d'une borne transactionnelle non surveillée en vue de détecter la présence d'un élément espion sur au moins un élément à sécuriser de la borne, comme par exemple le clavier ou le lecteur de carte.

Pour ce faire, il est prévu, selon ce mode de réalisation, de commander au moins un paramètre de rétro-éclairage de l'élément à sécuriser, par exemple la couleur, puis de demander à l'utilisateur de confirmer, ou infirmer, qu'il voit bien le résultat de cette commande.

En effet, ce mode de réalisation est basé sur le fait que, si un élément espion a été collé, ou disposé (par un tiers malintentionné) sur l'élément authentique à sécuriser, alors une modification de l'aspect visuel de l'élément authentique ne peut pas être vue, correctement, par un utilisateur.

Par exemple, si un clavier factice a été posé sur le clavier authentique de la borne transactionnelle non surveillée, une modification de la couleur de rétro-éclairage du clavier authentique ne sera pas correctement visible par l'utilisateur, voire même pas visible du tout, le clavier factice cachant totalement ou partiellement ce changement de couleur. De même, si un lecteur de carte factice a été posé sur le lecteur de carte authentique, alors un clignotement du rétro-éclairage du lecteur de carte authentique ne sera pas clairement visible pour l'utilisateur.

Si l'utilisateur ne voit pas du tout, ou pas distinctement, le résultat annoncé par le message affiché sur l'écran de la borne transactionnelle non surveillée, il peut répondre négativement au message affiché, ou ne pas répondre et abandonner la transaction en cours. Dans ces deux cas, une alerte peut être générée, de façon à prévenir (l'utilisateur ou un destinataire en charge de la maintenance de la borne transactionnelle non surveillée...) d'un risque de fraude sur la borne ou encore à empêcher l'utilisation de la borne soupçonnée d'être fauduleuse.

Selon un aspect particulier de l'invention, le système de sécurisation comprend en outre des moyens de vérification d'une anomalie détectée, comprenant les moyens suivants :
- des moyens de commande d'une source lumineuse externe au système de sécurisation ;
- des moyens d'analyse d'une intensité lumineuse, délivrant une décision de validation de l'anomalie détectée si l'intensité lumineuse analysée n'est pas conforme à une intensité lumineuse de référence.

Ainsi, selon cette variante du premier mode de réalisation, lorsqu'une anomalie a été détectée sur une borne transactionnelle non surveillée, suite à une non-réponse, ou une réponse négative d'un utilisateur à une modification de l'aspect visuel du clavier ou du lecteur de carte, l'invention prévoit de pouvoir vérifier que cette anomalie est bien représentative d'une fraude sur la borne.

Par exemple, cette vérification est effectuée par une personne en charge de la maintenance de la borne transactionnelle non surveillée.

Pour ce faire, des moyens matériels sont mis en œuvre, comme par exemple des moyens de détection d'une obstruction au-dessus du clavier ou du lecteur de carte, par détection d'une intensité lumineuse non conforme. Par exemple, ces moyens de détection d'une obstruction allient d'une part une source de lumière, extérieure au clavier ou au lecteur de carte (donc distincte des sources lumineuses internes pour le rétro-éclairage), dont l'allumage peut être piloté à distance, et d'autre part un capteur de luminosité, de façon à détecter que l'intensité lumineuse reçue par le capteur ne correspond pas à celle qu'il devrait recevoir dans une configuration authentique. Cela permet donc de détecter qu'un élément obstrue le capteur, comme par exemple un élément espion positionné au-dessus de l'élément à sécuriser.

Il est entendu que l'emplacement du capteur de luminosité doit être choisi de manière à optimiser la détection d'obstruction, en tenant compte également de la lumière ambiante qui peut être différente selon l'emplacement de la borne transactionnelle non surveillée, ou encore le moment où la vérification d'anomalie est effectuée ou encore, de la puissance de la source de lumière extérieure.

Selon un deuxième mode de réalisation de l'invention, les moyens de sécurisation comprennent :
- des moyens de commande d'une source lumineuse externe au système de sécurisation, un allumage de la source lumineuse externe correspondant au moyen d'interaction ;
- des moyens d'analyse d'une intensité lumineuse,
et les moyens de détection d'une anomalie délivrent une alerte si l'intensité lumineuse analysée n'est pas conforme à une intensité lumineuse de référence.

Ainsi, selon ce deuxième mode de réalisation, l'invention prévoit d'interagir avec un utilisateur, ou plus précisément un mainteneur de la borne transactionnelle non surveillée via des moyens de détection d'une obstruction au-dessus du clavier ou du lecteur de carte, par détection d'une intensité lumineuse non conforme.

Par exemple, ces moyens de détection d'une obstruction allient d'une part une source de lumière, extérieure au clavier ou au lecteur de carte (donc distinct des sources lumineuses internes pour le rétro-éclairage), dont l'allumage peut être piloté à distance, par l'utilisateur précité par exemple, et d'autre part un capteur de luminosité, de façon à détecter que l'intensité lumineuse reçue par le capteur ne correspond pas à celle qu'il devrait recevoir dans une configuration authentique. Cela permet donc de détecter qu'un élément obstrue le capteur, comme par exemple un élément espion positionné au-dessus de l'élément à sécuriser.

Il est entendu que l'emplacement du capteur de luminosité doit être choisi de manière à optimiser la détection d'obstruction, en tenant compte également de la lumière ambiante qui peut être différente selon l'emplacement de la borne transactionnelle non surveillée, ou encore le moment où la vérification d'anomalie est effectuée, ou encore, de la puissance de la source de lumière extérieure.

Par exemple, un élément à sécuriser correspond à un clavier ou un lecteur de carte.

Ainsi, le ou les éléments à sécuriser de la borne transactionnelle non surveillée correspondent aux éléments via lesquels des données sensibles et confidentielles transitent, comme par exemple le clavier sur lequel un utilisateur saisit son code confidentiel ou un lecteur de carte apte à lire des données sensibles présentes dans la carte de paiement insérée par l'utilisateur.

En effet, ces deux éléments à sécuriser sont les éléments principaux visés par des attaques par collage d'un élément factice au-dessus de l'élément authentique, de manière presque indétectable par un utilisateur, même méfiant.

Selon une caractéristique particulière de l'invention, le système de sécurisation comprend des moyens de réception d'au moins une commande de déclenchement des moyens de sécurisation, en provenance d'un module de sécurisation de la borne transactionnelle non surveillée.

Ainsi, selon cette variante de réalisation, le système de sécurisation comprend également des moyens de réception d'une commande pour déclencher/activer les moyens de sécurisation proprement dits, de façon à ne mettre en œuvre l'invention que lorsque des données sensibles sont susceptibles d'être interceptées par un éventuel élément espion. Par exemple, le système de sécurisation reçoit une commande de déclenchement de ses moyens lorsqu'un utilisateur active le clavier pour saisir un code confidentiel ou lorsqu'une carte est insérée dans le lecteur de carte, impérativement avant que les données de la carte ne soient lues.

De cette manière, l'invention n'est pas mise en œuvre lorsqu'aucune activité n'est détectée sur la borne transactionnelle non surveillée, de façon à ne pas modifier inutilement le comportement de la borne.

De plus, cela permet de ne pas alerter la personne malveillante, afin qu'elle ne mette au point son système.

Par exemple, les moyens de réception d'une commande de déclenchement et/ou les moyens de sécurisation sont mis en œuvre dans l'élément à sécuriser.

Ainsi, l'invention ne nécessite pas de module matériel ou logiciel spécifique(s) mais utilise des moyens déjà présents dans un des éléments à sécuriser de la borne transactionnelle non surveillée, par exemple dans le clavier.

En effet, il est courant actuellement que le clavier comprenne des moyens logiciels et matériels correspondant à de « l'intelligence », c'est-à-dire permettant par exemple de transmettre des messages à destination de l'interface homme-machine de la borne transactionnelle non surveillée, de traiter des messages reçus en provenance de l'interface homme-machine, de recevoir des commandes par exemple pour activer des composants du clavier ...

Selon un aspect particulier, les moyens de commande d'au moins un paramètre de rétro-éclairage appartiennent au groupe comprenant :
- des moyens d'activation d'une ou plusieurs couleur(s) émise(s) par au moins une source lumineuse interne à l'élément à sécuriser ;
- des moyens d'activation intermittente d'au moins une source lumineuse interne à l'élément à sécuriser ;
- une combinaison des moyens d'activation.

Ainsi, l'invention, selon ses différentes variantes du premier mode de réalisation, permet de commander un aspect visuel externe de l'élément à sécuriser (le clavier ou le lecteur de carte) de façon à permettre à un utilisateur de réagir si le résultat attendu de cette commande ne lui apparaît pas explicitement, ce qui signifierait qu'un élément espion est probablement installé au-dessus du clavier/lecteur de carte.

Par exemple, la couleur « globale » de l'élément à sécuriser peut être changée par rapport à la couleur « classique », en choisissant une couleur différente pour toutes les sources lumineuses (par exemple les leds de rétro-éclairage du clavier ou du lecteur de carte) ou en utilisant des leds multicolores permettant de choisir la couleur à émettre, par exemple de manière aléatoire pour complexifier la reproduction malintentionnée du comportement de l'élément sécurisé. Le message affiché simultanément sur l'écran de la borne transactionnelle non surveillée peut consister par exemple à demander à l'utilisateur si le clavier/le lecteur de carte apparaît bien dans la couleur spécifique choisie.

Selon une autre variante, seule la couleur d'une partie de l'élément à sécuriser peut être changée par rapport à la couleur « classique », en choisissant une couleur différente pour une partie seulement des sources lumineuses (par exemple les leds de rétro-éclairage de certaines touches du clavier, ou uniquement du « tour » du clavier, ou les leds de rétro-éclairage de la partie inférieure du lecteur de carte...).

Selon encore une autre variante, la commande consiste à activer de façon intermittente une ou plusieurs leds de rétro-éclairage du clavier/lecteur de carte, pour obtenir un clignotement. Cette variante permet par exemple de tenir compte d'un éventuel défaut de vision de l'utilisateur (le daltonisme), qui ne verrait pas les couleurs correctement mais pourrait voir un clignotement sans problème.

Enfin, il est bien entendu possible de combiner ces différents modes de réalisation, de façon à choisir non seulement la couleur, globalement ou partiellement, de l'élément à sécuriser, mais également d'obtenir un clignotement de cette couleur.

Selon une caractéristique particulière de l'invention, le système de sécurisation comprend des moyens de rétro-éclairage d'au moins une partie de l'élément à sécuriser, les moyens de rétro-éclairage appartenant au groupe comprenant :
- un guide lumière autour d'au moins une partie de l'élément à sécuriser ;
- une structure composée d'une pièce plastique, reliée à au moins une source lumineuse interne à l'élément à sécuriser, posée sur une pièce blanche résistante aux chocs ;
- une structure composée d'une pièce diffusant la lumière, reliée à au moins une source lumineuse interne à l'élément à sécuriser, d'un film dépoli diffusant la lumière et d'une pièce de protection résistante aux chocs ;
- une source lumineuse disposée sous au moins une touche de l'élément à sécuriser, lorsque ce dernier correspond à un clavier.

Ainsi, l'invention, selon ses différentes variantes du premier mode de réalisation, comprend des moyens spécifiques de rétro-éclairage permettant la mise en œuvre des moyens de sécurisation et notamment des commandes des paramètres de rétro-éclairage décrits ci-dessus.

Plusieurs variantes différentes des moyens de rétro-éclairage peuvent être mises en œuvre, et des moyens existants peuvent notamment être utilisés, comme par exemple des guides lumière utilisés classiquement pour le rétro-éclairage d'un clavier ou d'un lecteur de carte. Cela permet ainsi de limiter les modifications de structure à effectuer sur le dispositif à sécuriser.

Par ailleurs, des moyens très précis peuvent être utilisés, de manière à renforcer la sécurisation, comme par exemple un éclairage distinct pour chaque touche du clavier, dont la couleur pourra par exemple être différente.

Par exemple, l'alerte appartient au groupe comprenant :
- un message d'alerte affiché, à destination de l'utilisateur, sur l'écran de la borne de paiement électronique ;
- un message d'alerte transmis à un destinataire prédéfini, par exemple un mainteneur ;
- une combinaison des alertes ci-dessus.

L'invention concerne également un procédé de sécurisation d'au moins un élément d'une borne transactionnelle non surveillée, dit élément à sécuriser, comprenant :
- une étape de sécurisation de l'élément à sécuriser, délivrant au moins un moyen d'interaction avec au moins un utilisateur de la borne transactionnelle non surveillée ;
- une étape de détection d'une anomalie en fonction du moyen d'interaction.

L'invention concerne également un produit programme d'ordinateur, comprenant des instructions de code de programme pour la mise en œuvre d'un procédé tel que décrit précédemment, lorsque le programme est exécuté sur un ordinateur.

L'invention concerne également un médium de stockage lisible par ordinateur et non transitoire, stockant un produit programme d'ordinateur tel que décrit ci-dessus.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- les figures la à 1c illustrent respectivement un exemple de système de sécurisation selon le principe général de l'invention et deux modes de réalisation ;
- les figures 2a à 2d illustrent quatre variantes de réalisation des moyens de rétro-éclairage d'un système de sécurisation tel qu'illustré en figure 1 ;
- la figure 3 illustre les principales étapes d'un procédé de sécurisation selon un mode de réalisation de l'invention.

Sur toutes les figures du présent document, les éléments et étapes identiques sont désignés par une même référence.

### 5. Description

### 5.1. Principe général

Le principe général de la technique décrite consiste à modifier un aspect visuel d'un élément à sécuriser d'une borne transactionnelle non surveillée et à déclencher une interaction, en lien avec la modification effectuée, avec un utilisateur de cette borne pour détecter une éventuelle anomalie sur cet élément à sécuriser, comme par exemple le clavier ou le lecteur de carte à puce.

Ainsi, la solution de l'invention, selon ses différents modes de réalisation, permet de détecter une éventuelle fraude sur un élément d'une borne transactionnelle non surveillée, fraude difficilement détectable par un utilisateur (en particulier pour un utilisateur non averti) sans des moyens spécifiques, en impliquant directement l'utilisateur de la borne via des moyens d'interaction.

Par la suite, pour une lecture plus aisée, on décrira des exemples de sécurisation d'un élément à sécuriser d'une borne transactionnelle non surveillée, mais il est bien entendu que plusieurs éléments (par exemple le clavier et le lecteur de carte) peuvent être sécurisés en même temps au sein d'une même borne transactionnelle non surveillée.

Par exemple, et comme illustré en figure la, un élément à sécuriser d'une borne transactionnelle non surveillée correspond au clavier K (10) ou au lecteur de carte R (11). En effet, ces deux éléments subissent fréquemment des tentatives de piratage ou de fraude, du fait qu'ils permettent à des données sensibles de transiter pour effectuer une transaction bancaire (par un exemple un code confidentiel saisi sur le clavier ou des données de la carte à puce/à piste insérée dans le lecteur de carte). Comme déjà indiqué en relation avec l'art antérieur, une des attaques les plus fréquemment observées sur ces éléments consiste à coller un élément factice, très difficilement détectable par un utilisateur, de façon à espionner les données sensibles qui transitent, sans empêcher le fonctionnement classique de la borne transactionnelle non surveillée, et donc sans alerter l'utilisateur final.

Classiquement, une borne transactionnelle non surveillée comprend également une interface homme-machine IHM permettant, via un écran, d'interagir avec un utilisateur (par exemple pour afficher des consignes d'insertion de carte ou de saisie d'un code, afficher des montants de retrait ou des choix d'actions possibles).

Par ailleurs, le système de sécurisation de la présente invention, selon ses différents modes de réalisation, comprend d'une part des moyens de sécurisation 12 capables de modifier, de façon visuelle, un aspect de la borne transactionnelle non surveillée, et d'interagir avec l'utilisateur de la borne via un moyen d'interaction 120, et d'autre part des moyens de détection 13 d'une anomalie, en fonction de l'interaction avec l'utilisateur.

Ces différents moyens sont décrits plus en détails ci-après, en relation avec différents modes de réalisation de l'invention.

### 5.2. Description d'un premier mode de réalisation

### 5.2.1. Sécurisation

On présente maintenant, en relation avec la figure la, un exemple d'un système de sécurisation d'au moins un élément d'une borne transactionnelle non surveillée, selon un premier mode de réalisation de l'invention.

Selon ce premier mode de réalisation de l'invention, les moyens de sécurisation (12) du système de sécurisation comprennent :
- d'une part, des moyens de commande d'au moins un paramètre de rétro-éclairage de l'élément à sécuriser, de façon à modifier l'aspect visuel de l'élément à sécuriser,
- d'autre part, des moyens d'émission d'un signal portant un message lié à ce paramètre de rétro-éclairage et destiné à être affiché sur un écran de la borne transactionnelle non surveillée, de façon à inviter l'utilisateur à confirmer qu'il a bien visualisé la modification de l'aspect visuel de l'élément à sécuriser.

Ainsi, le système de sécurisation selon ce mode de réalisation de l'invention permet de détecter une éventuelle anomalie, dans le cas où la réponse de l'utilisateur ne correspond pas à une réponse attendue dans une situation normale. Par exemple, si l'utilisateur ne confirme pas qu'il visualise la modification, ou ne répond pas à la sollicitation d'interaction, le système de sécurisation détecte une éventuelle anomalie.

Par ailleurs, les moyens de commande permettant la modification de l'aspect visuel de l'élément à sécuriser correspondent par exemple à :
- des moyens d'activation d'une couleur émise par au moins une source lumineuse interne à l'élément à sécuriser, de façon à faire changer de couleur tout ou partie de l'élément à sécuriser, selon l'emplacement de la source ou des sources lumineuse(s) (autour du clavier, sous chaque touche du clavier, autour de la fente d'insertion du lecteur de carte ....), et/ou
- des moyens d'activation intermittente d'au moins une source lumineuse interne audit au moins un élément à sécuriser, de façon à faire clignoter une ou plusieurs sources lumineuse(s) interne(s) à l'élément à sécuriser.

Une combinaison de ces moyens d'activation peut être mise en œuvre, par exemple en faisant clignoter une ou plusieurs sources lumineuses tout en en changeant la couleur. Les moyens mis en œuvre relativement à ces sources lumineuses sont décrits plus en détails ci-après.

Par ailleurs, l'interaction mise en œuvre avec l'utilisateur correspond par exemple à l'affichage d'un message sur l'écran de la borne transactionnelle non surveillée, via l'IHM, sollicitant une réponse de la part de l'utilisateur. Ce message doit bien entendu être adapté à la modification effectuée sur l'aspect visuel de l'élément à sécuriser, de façon à ce que la réponse de l'utilisateur soit cohérente. Ce message est affiché de manière simultanée à la modification effectuée sur l'aspect visuel, afin de rendre plus difficile la reproduction de ce comportement par un tiers malintentionné.

Ainsi, si la modification consiste par exemple à rétro-éclairer le clavier en bleu, alors qu'il est classiquement rétro-éclairé en blanc, le message peut être formulé comme suit :
*« Merci de bien vouloir confirmer que le clavier apparaît maintenant en bleu, en appuyant sur la touche OK.*
*Sinon appuyer sur la touche ANNULATION ».*

Si la modification consiste à faire clignoter le rétro-éclairage de la fente d'insertion du lecteur de carte, sans en modifier la couleur, le message peut être formulé comme suit :
*« Merci de bien vouloir confirmer que la fente d'insertion de carte clignote, en appuyant sur la touche OK.*
*Sinon appuyer sur la touche ANNULATION ».*

Ce message peut être précédé d'un autre message consistant en une annonce relative à la sécurité de la borne transactionnelle non surveillée en cours d'utilisation, informant l'utilisateur qu'une procédure simple et rapide de détection d'anomalie va suivre en sollicitant une réponse de sa part.

L'utilisateur est donc incité à saisir une réponse, via le clavier. Cette réponse, ou l'absence de réponse à l'expiration d'une durée prédéterminée, est traitée par les moyens de détection 13 d'une anomalie pour en déduire ou non la présence d'une anomalie.

Selon les exemples de message ci-dessus, si l'utilisateur appuie sur la touche OK, les moyens de détection 13 analysent cette réponse comme une absence d'anomalie et la transaction se poursuit normalement, l'utilisateur étant de plus rassuré sur l'authenticité des éléments sensibles de la borne transactionnelle non surveillée qu'il utilise.

En revanche, si l'utilisateur appuie sur la touche *ANNULATION,* les moyens de détection 13 analysent cette réponse comme une détection d'anomalie et délivrent par exemple une alerte. De même, si l'utilisateur, rendu méfiant par le fait qu'il ne visualise pas la couleur et/ou le clignotement annoncé(e), préfère ne pas poursuivre en ne répondant pas au message affiché, les moyens de détection 13 traitent cette absence de réponse comme une détection d'anomalie et délivrent par exemple une alerte. Classiquement, une absence de réponse n'est considérée comme avérée qu'à l'expiration d'un délai prédéterminé, donnant le temps à l'utilisateur d'interagir. Pendant ce délai, l'aspect visuel modifié par les moyens de sécurisation est maintenu (le clignotement continue par exemple, ou la couleur modifiée est toujours affichée).

Une telle alerte peut prendre plusieurs formes, combinant par exemple une information à destination de l'utilisateur et/ou d'un gestionnaire (ou personne en charge de la maintenance) de la borne transactionnelle non surveillée et la mise en sécurité de la borne soupçonnée d'attaque.

Ainsi, l'alerte peut consister à afficher un nouveau message sur l'écran de la borne transactionnelle non surveillée, informant l'utilisateur d'une fraude potentielle et lui recommandant de ne plus utiliser la borne.

Par ailleurs, une alerte peut également être envoyée à un destinataire pré-identifié, comme par exemple un gestionnaire en charge de la maintenance de la borne transactionnelle non surveillée. Ce gestionnaire pourra ensuite vérifier si l'anomalie détectée est avérée, en se déplaçant sur site. Cette vérification peut également être mise en œuvre grâce à des moyens de vérification décrits plus en détails ci-après (paragraphe 5.2.3), en relation avec ce premier mode de réalisation de l'invention.

Par ailleurs, la mise en œuvre d'une telle sécurisation d'un élément d'une borne transactionnelle non surveillée n'est a priori nécessaire que lorsque la borne est en cours d'utilisation, c'est-à-dire lorsqu'une transaction est initiée par exemple.

Ainsi, le système de sécurisation de l'invention, selon ce mode de réalisation, comprend également des moyens de réception d'au moins une commande de déclenchement des moyens de sécurisation, en provenance d'un module de sécurisation de ladite borne transactionnelle non surveillée.

Par exemple, le module de sécurisation, qui peut se situer dans l'élément à sécuriser lui-même, ou plus généralement dans la borne transactionnelle non surveillée, détecte que cet élément à sécuriser est activé (par exemple lorsqu'une carte est insérée dans le lecteur de carte, ou lorsqu'un code confidentiel est requis par saisie via le clavier) et transmet alors une commande au système de sécurisation pour déclencher les moyens de sécurisation.

Ainsi, les modifications apportées à l'aspect visuel d'un ou plusieurs éléments à sécuriser d'une borne transactionnelle non surveillée ne sont effectivement mises en œuvre que lorsque la borne est en cours d'utilisation et qu'il est nécessaire d'en vérifier l'absence de fraude.

Selon une variante d'utilisation, cette commande de déclenchement de la sécurisation peut également être envoyée à la demande d'un gestionnaire ou d'un mainteneur, qui souhaiterait effectuer des vérifications de l'authenticité d'une ou plusieurs bornes transactionnelles non surveillées en même temps, par exemple au moment de son passage sur un site où sont présentes plusieurs bornes. Dans une telle situation, le mainteneur peut déclencher la sécurisation de plusieurs bornes en même temps, par exemple en faisant clignoter, ou en choisissant une couleur non classique pour le rétro-éclairage de tous les claviers des bornes autour de lui (cela peut correspondre par exemple à une configuration dans une gare où se trouvent plusieurs distributeurs de billets de train) et/ou tous les lecteurs de carte de ces bornes. Ainsi, le mainteneur est capable d'avoir une vision globale du parc de bornes transactionnelles non surveillées et si une ou plusieurs ne clignote(nt) pas, ou si une ou plusieurs reste(nt) rétro-éclairée(s) avec la couleur classique, alors il peut se déplacer plus près pour vérifier si une fraude est avérée.

### 5.2.2. Moyens de rétro-éclairage

On décrit maintenant plus en détails les moyens de rétro-éclairage mis en œuvre, selon ce premier mode de réalisation de l'invention, pour modifier l'aspect visuel de l'élément à sécuriser.

Il est à noter que lorsque des moyens de rétro-éclairage existent déjà, par exemple sous la forme de sources de lumière (comme des LEDs) associées à un ou plusieurs guides lumière, ces moyens peuvent être utilisés pour la mise en œuvre de la présente invention, afin d'optimiser les coûts.

Les moyens existants peuvent néanmoins être adaptés, par exemple en remplaçant les LEDs blanches classiquement utilisées par des LEDs de couleur. De plus, des adaptations sont également nécessaires pour la mise en œuvre des moyens de vérification décrits ci-après.

Lorsqu'aucun moyen de rétro-éclairage n'est déjà présent pour l'élément à sécuriser, l'invention, selon ce mode de réalisation, prévoit d'en ajouter.

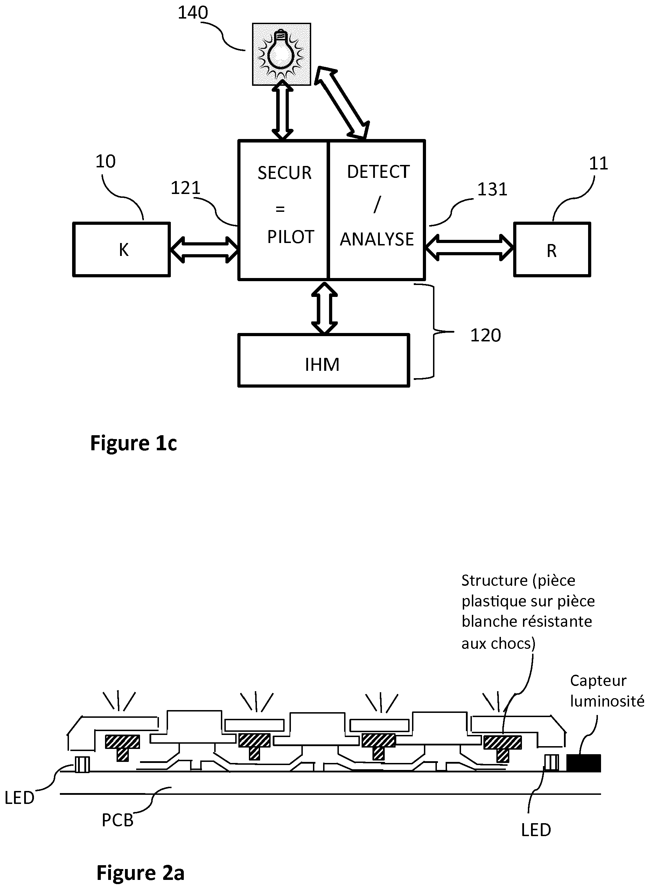

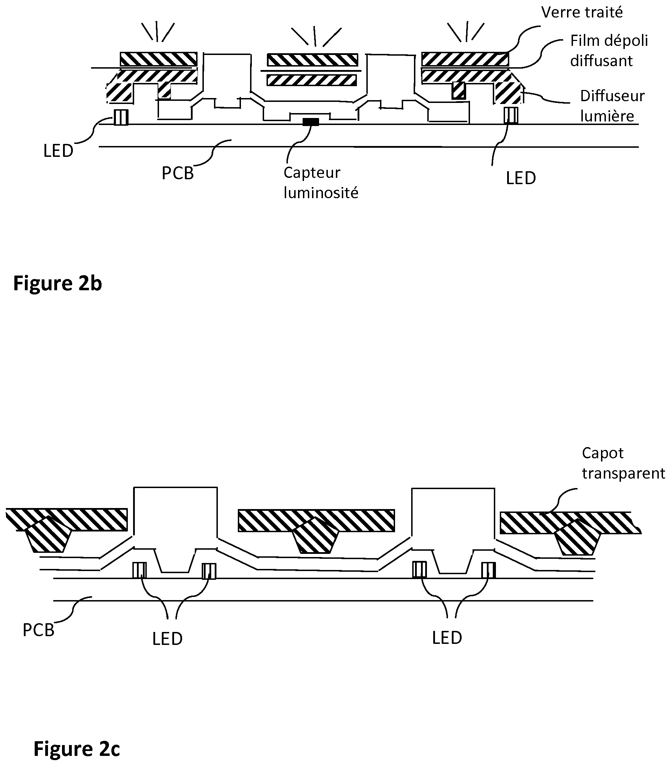

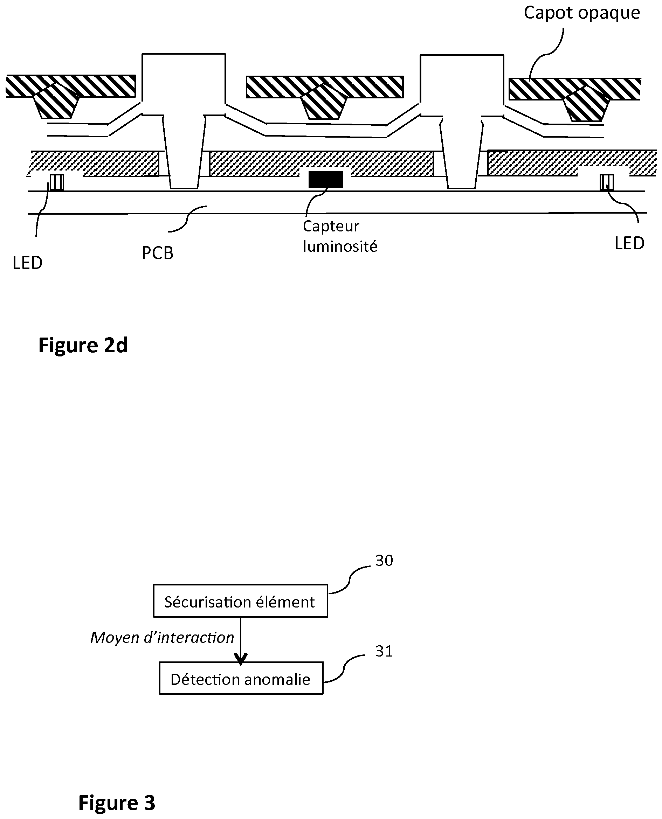

Ces moyens de rétro-éclairage peuvent donc être mis en œuvre sous des formes variées telles que, par exemple :
- un guide lumière autour d'au moins une partie de l'élément à sécuriser : par exemple un guide lumière encadrant le clavier ou le lecteur de carte, et rétro-éclairant l'élément à sécuriser sous la forme de quatre traits lumineux. Les sources lumineuses permettant le rétro-éclairage peuvent être de couleurs identiques ou différentes ;
- dans le cas où l'élément à sécuriser correspond au clavier :
   ∘ une structure composée d'une pièce plastique, reliée à au moins une source lumineuse interne au clavier, posée sur une pièce blanche résistante aux chocs, comme illustré en figure 2a. Une telle configuration est relativement classique et peut être modifiée pour l'invention en remplaçant les LEDs blanches par des LEDs de couleur ;
   ∘ une structure composée d'une pièce diffusant la lumière, reliée à au moins une source lumineuse interne au clavier, d'un film dépoli diffusant la lumière et d'une pièce de protection résistante aux chocs (en verre par exemple), comme illustré en figure 2b. Une telle configuration correspond en quelque sorte à un clavier en verre, éclairé par derrière par une pièce lumineuse ;
   ∘ une source lumineuse disposée sous au moins une touche du clavier, ou sous chaque touche, permettant ainsi d'éclairer individuellement plusieurs touches du clavier de couleurs différentes, comme illustré en figures 2c et 2d. Ainsi, selon une première variante illustrée en figure 2c, le clavier est très simple, et présente une led par touche, pilotables séparément, et ne nécessitant pas de guide lumière ; un capteur de luminosité peut être positionné à côté de chaque touche (pour la détection d'obstruction déjà décrite ci-dessus, à condition que la led soit éteinte au moment de la détection d'obstruction, de façon à ne pas éblouir le capteur). Selon une deuxième variante illustrée en figure 2d, on utilise un nombre réduit de leds (par exemple 2 ou 4) et la lumière est guidée, via un guide lumière, à la verticale des touches; un capteur de luminosité doit donc être judicieusement positionné pour être suffisamment éclairé par la lumière extérieure.

Ainsi, selon la mise en œuvre choisie pour les moyens de rétro-éclairage, il est possible de modifier et/ou de faire clignoter la couleur d'un guide lumière encadrant le clavier et/ou le lecteur de carte, de modifier et/ou de faire clignoter la couleur globale du rétro-éclairage d'un clavier, ou encore de modifier et/ou de faire clignoter de manière indépendante la couleur de plusieurs touches d'un clavier.

Les messages d'interaction à destination de l'utilisateur sont alors adaptés à la modification de l'aspect visuel effectivement mise en œuvre.

### 5.2.3. Vérification

L'invention, selon ce mode de réalisation, prévoit également des moyens de vérification permettant de vérifier si l'anomalie détectée est avérée, en détectant une obstruction synonyme de la présence d'un élément espion collé par-dessus l'élément à sécuriser (par exemple un clavier factice).

Pour ce faire, les moyens de vérification d'une anomalie détectée comprennent, selon ce premier mode de réalisation, les moyens suivants :
- des moyens de commande/pilotage 14 d'une source lumineuse externe 140 au système de sécurisation, permettant notamment de piloter à distance l'allumage, l'extinction et/ou le clignotement d'une source lumineuse externe, dont l'intensité lumineuse est connue et correspond à une intensité lumineuse de référence, lorsqu'elle est allumée ;
- des moyens d'analyse 15 d'une intensité lumineuse, délivrant une décision de validation de l'anomalie détectée si l'intensité lumineuse analysée n'est pas conforme à une intensité lumineuse de référence. Par exemple, il s'agit d'un capteur de luminosité, judicieusement placé pour détecter l'intensité de référence de la source lumineuse externe en fonctionnement normal et pour détecter une obstruction synonyme de fraude lorsqu'un élément espion est mal intentionnellement positionné au-dessus de l'élément à sécuriser.

Ces moyens de vérification peuvent être activés par exemple par le mainteneur de la borne transactionnelle non surveillée, averti par l'alerte émise au moment de la détection d'une anomalie. De cette manière, le mainteneur peut vérifier cette anomalie à distance, sans se déplacer sur le site où se trouve la borne. Il peut ainsi renforcer les actions de mise en sécurité de la borne transactionnelle non surveillée éventuellement déjà mises en œuvre, en mettant la borne « hors service », avant de se déplacer pour confirmer la panne et mettre en place des actions correctives (démontage de l'élément espion par exemple).

### 5.3. Description d'un deuxième mode de réalisation

Ce deuxième mode de réalisation met en fait en œuvre une sécurisation correspondant à la vérification décrite ci-dessus, la sécurisation consistant donc à détecter une obstruction synonyme de la présence d'un élément espion collé par-dessus l'élément à sécuriser (par exemple un clavier factice).

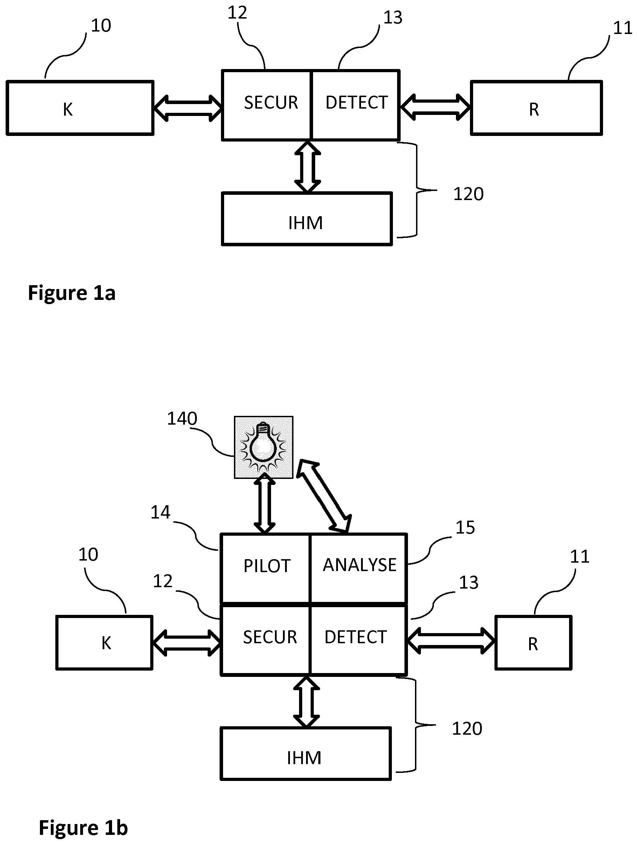

Plus précisément, selon ce deuxième mode de réalisation, illustré en figure 1c, les moyens de sécurisation 12 comprennent :
- des moyens de commande/pilotage 121 d'une source lumineuse externe 140 au système de sécurisation, un allumage de la source lumineuse externe correspondant au moyen d'interaction. Ainsi, l'interaction avec l'utilisateur consiste à allumer la source extérieure de lumière (et non à répondre à un message affiché sur l'écran de la borne transactionnelle non surveillée, comme dans le premier mode de réalisation) ;
- des moyens d'analyse 131 d'une intensité lumineuse. Par exemple, il s'agit d'un capteur de luminosité, judicieusement placé pour détecter l'intensité de référence de la source lumineuse externe en fonctionnement normal et pour détecter une obstruction synonyme de fraude lorsqu'un élément espion est mal intentionnellement positionné au-dessus de l'élément à sécuriser.

De plus, selon ce deuxième mode de réalisation, les moyens de détection d'une anomalie délivrent une alerte si l'intensité lumineuse analysée n'est pas conforme à une intensité lumineuse de référence.

Ainsi, ce deuxième mode de réalisation est plus particulièrement adapté dans le cas de la maintenance d'une borne transactionnelle non surveillée ou d'un parc de bornes transactionnelles non surveillées, lorsque le mainteneur souhaite, avant de se déplacer sur site, effectuer une première vérification de l'authenticité des bornes du parc. En effet, dans un tel contexte, le mainteneur peut piloter à distance l'allumage de chaque source lumineuse externe prévue sur chaque borne transactionnelle non surveillée et détecter une éventuelle obstruction via le capteur de luminosité placé à l'intérieur de chaque élément à sécuriser de chaque borne.

### 5.4. Procédé de sécurisation

L'invention concerne également un procédé de sécurisation d'au moins un élément d'une borne transactionnelle non surveillée, dit élément à sécuriser, tel qu'illustré en figure 3.

Selon ce mode de réalisation de l'invention, le procédé comprend une étape de sécurisation 30 d'au moins un élément à sécuriser (le clavier et/ou le lecteur de carte), délivrant au moins un moyen d'interaction 120 avec l'utilisateur de la borne transactionnelle non surveillée.

Comme déjà décrit ci-dessus en relation avec les deux modes de réalisation de l'invention, le moyen d'interaction peut consister en un message affiché sur l'écran de la borne (premier mode de réalisation) auquel doit répondre l'utilisateur selon son observation du comportement de la borne, ou peut consister à allumer la source extérieure de lumière (deuxième mode de réalisation).

Une étape de détection 31 d'une anomalie est ensuite mise en œuvre, en fonction du moyen d'interaction, comme décrit ci-dessus en relation avec les deux modes de réalisation de l'invention.

Le procédé de sécurisation, selon les différents modes de réalisation de l'invention, peut être mis en œuvre dans la borne transactionnelle non surveillée, et plus particulièrement dans l'élément à sécuriser lui-même (par exemple le clavier ou le lecteur de carte).

## Revendications

1. Système de sécurisation d'au moins un élément (10, 11) d'une borne transactionnelle non surveillée, dit élément à sécuriser, ledit système comprenant:
• des moyens de sécurisation (12) dudit au moins un élément à sécuriser, délivrant au moins un moyen d'interaction (120) avec au moins un utilisateur de ladite borne transactionnelle non surveillée, lesdits moyens de sécurisation comprenant :
∘ des moyens de commande d'au moins un paramètre de rétro-éclairage d'au moins une partie dudit au moins un élément à sécuriser ;
∘ des moyens d'émission d'au moins un signal portant au moins un message, relatif audit paramètre de rétro-éclairage, destiné à être affiché sur un écran de ladite borne transactionnelle non surveillée, ledit au moins un message correspondant audit au moins un moyen d'interaction ;
• des moyens de détection (13) d'une anomalie en fonction dudit au moins un moyen d'interaction, lesdits moyens de détection d'une anomalie délivrant une alerte si aucune réponse audit message affiché n'est reçue avant l'expiration d'un temps prédéterminé ou si une réponse reçue audit message affiché est négative ;
• ledit système étant **caractérisé en ce qu'**il comprend des moyens de vérification d'une anomalie détectée, comprenant les moyens suivants :
∘ des moyens de commande d'une source lumineuse externe audit système de sécurisation ;
∘ des moyens d'analyse d'une intensité lumineuse, délivrant une décision de validation de ladite anomalie détectée si ladite intensité lumineuse analysée n'est pas conforme à une intensité lumineuse de référence.

2. Système de sécurisation selon la revendication 1, **caractérisé en ce que** lesdits moyens de sécurisation comprennent :
• des moyens de commande d'une source lumineuse externe audit système de sécurisation, un allumage de ladite source lumineuse externe correspondant audit moyen d'interaction ;
• des moyens d'analyse d'une intensité lumineuse,
et **en ce que** lesdits moyens de détection d'une anomalie délivrent une alerte si ladite intensité lumineuse analysée n'est pas conforme à une intensité lumineuse de référence.

3. Système de sécurisation selon la revendication 1, **caractérisé en ce que** ledit au moins un élément à sécuriser correspond à un clavier ou un lecteur de carte.

4. Système de sécurisation selon l'une quelconque des revendications 1 à 3, **caractérisé en ce qu'**il comprend des moyens de réception d'au moins une commande de déclenchement desdits moyens de sécurisation, en provenance d'un module de sécurisation de ladite borne transactionnelle non surveillée.

5. Système de sécurisation selon la revendication 4, **caractérisé en ce que** lesdits moyens de réception d'une commande de déclenchement et/ou lesdits moyens de sécurisation sont mis en œuvre dans ledit au moins un élément à sécuriser.

6. Système de sécurisation selon la revendication 1, **caractérisé en ce que** lesdits moyens de commande d'au moins un paramètre de rétro-éclairage appartiennent au groupe comprenant :
• des moyens d'activation d'une ou plusieurs couleur(s) émise(s) par au moins une source lumineuse interne audit au moins un élément à sécuriser ;
• des moyens d'activation intermittente d'au moins une source lumineuse interne audit au moins un élément à sécuriser ;
• une combinaison desdits moyens d'activation.

7. Système de sécurisation selon la revendication 1, **caractérisé en ce qu'**il comprend des moyens de rétro-éclairage d'au moins une partie dudit au moins un élément à sécuriser, lesdits moyens de rétro-éclairage appartenant au groupe comprenant :
• un guide lumière autour d'au moins une partie dudit élément à sécuriser ;
• une structure composée d'une pièce plastique, reliée à au moins une source lumineuse interne audit au moins un élément à sécuriser, posée sur une pièce blanche résistante aux chocs ;
• une structure composée d'une pièce diffusant la lumière, reliée à au moins une source lumineuse interne audit au moins un élément à sécuriser, d'un film dépoli diffusant la lumière et d'une pièce de protection résistante aux chocs ;
• une source lumineuse disposée sous au moins une touche dudit élément à sécuriser, lorsque ce dernier correspond à un clavier.

8. Procédé de sécurisation d'au moins un élément d'une borne transactionnelle non surveillée, dit élément à sécuriser, ledit procédé comprenant:
• une étape de sécurisation (30) dudit au moins un élément à sécuriser, délivrant au moins un moyen d'interaction (120) avec au moins un utilisateur de ladite borne transactionnelle non surveillée, ladite étape de sécurisation (12) comprenant :
∘ la commande d'au moins un paramètre de rétro-éclairage d'au moins une partie dudit au moins un élément à sécuriser ;
∘ l'émission d'au moins un signal portant au moins un message, relatif audit paramètre de rétro-éclairage, destiné à être affiché sur un écran de ladite borne transactionnelle non surveillée, ledit au moins un message correspondant audit au moins un moyen d'interaction ;
• une étape de détection (31) d'une anomalie en fonction dudit au moins un moyen d'interaction, ladite étape de détection d'une anomalie délivrant une alerte si aucune réponse audit message affiché n'est reçue avant l'expiration d'un temps prédéterminé ou si une réponse reçue audit message affiché est négative ;
• ledit procédé étant **caractérisé en ce qu'**il comprend une étape de vérification d'une anomalie détectée, ladite étape de vérification comprenant :
∘ la commande d'une source lumineuse externe audit système de sécurisation ;
∘ l'analyse d'une intensité lumineuse, délivrant une décision de validation de ladite anomalie détectée si ladite intensité lumineuse analysée n'est pas conforme à une intensité lumineuse de référence.

9. Produit programme d'ordinateur, comprenant des instructions de code de programme pour la mise en œuvre d'un procédé selon la revendication 8, lorsque ledit programme est exécuté sur un ordinateur.

10. Médium de stockage lisible par ordinateur et non transitoire, stockant un produit programme d'ordinateur selon la revendication 9.

## Patentansprüche

1. System zur Sicherung mindestens eines Elements (10, 11) einer nicht überwachten Servicesäule, das zu sicherndes Element genannt wird, wobei das System aufweist:
• Sicherungsmittel (12) des mindestens einen zu sichernden Elements, die mindestens ein Interaktionsmittel (120) mit mindestens einem Benutzer der nicht überwachten Servicesäule bereitstellen, wobei die Sicherheitsmittel aufweisen:
∘ Mittel zum Steuern mindestens eines Parameters der Hintergrundbeleuchtung von mindestens einem Teil des mindestens einen zu sichernden Elements,
∘ Mittel zum Senden mindestens eines Signals, das mindestens eine Nachricht in Bezug auf den Parameter der Hintergrundbeleuchtung trägt, die dazu bestimmt ist, auf einem Bildschirm der nicht überwachten Servicesäule angezeigt zu werden, wobei die mindestens eine Nachricht dem mindestens einen Interaktionsmittel entspricht,
• Mittel zum Erfassen (13) einer Anomalie in Abhängigkeit von dem mindestens einen Interaktionsmittel, wobei die Mittel zum Erfassen einer Anomalie einen Alarm abgeben, wenn vor Ablauf einer vorgegebenen Zeit keine Antwort auf die angezeigte Nachricht erhalten wird oder wenn eine auf die angezeigte Nachricht erhaltene Antwort negativ ist,
• wobei das System **dadurch gekennzeichnet ist, dass** es Mittel zum Überprüfen einer erfassten Anomalie aufweist, die die folgenden Mittel aufweisen:
∘ Mittel zum Steuern einer Lichtquelle außerhalb des Systems zur Sicherung,
∘ Mittel zum Analysieren einer Lichtintensität, die eine Validierungsentscheidung der erfassten Anomalie treffen, wenn die analysierte Lichtintensität nicht einer Referenzlichtintensität entspricht.

2. System zur Sicherung nach Anspruch 1, **dadurch gekennzeichnet, dass** die Sicherungsmittel aufweisen:
• Mittel zum Steuern einer Lichtquelle außerhalb des Systems zur Sicherung, wobei ein Einschalten der externen Lichtquelle dem Interaktionsmittel entspricht,
• Mittel zum Analysieren einer Lichtintensität und dadurch, dass die Mittel zum Erfassen einer Anomalie einen Alarm abgeben, wenn die analysierte Lichtintensität nicht einer Referenzlichtintensität entspricht.

3. System zur Sicherung nach Anspruch 1, **dadurch gekennzeichnet, dass** das mindestens eine zu sichernde Element einer Tastatur oder einem Kartenleser entspricht.

4. System zur Sicherung nach einem der Ansprüche 1 bis 3, **dadurch gekennzeichnet, dass** es Mittel zum Empfangen mindestens eines Auslösebefehls der Sicherungsmittel von einem Sicherungsmodul der nicht überwachten Servicesäule aufweist.

5. System zur Sicherung nach Anspruch 4, **dadurch gekennzeichnet, dass** die Mittel zum Empfangen eines Auslösebefehls und/oder die Sicherungsmittel in dem mindestens einen zu sichernden Element eingesetzt werden.

6. System zur Sicherung nach Anspruch 1, **dadurch gekennzeichnet, dass** die Mittel zum Steuern mindestens eines Parameters der Hintergrundbeleuchtung zu der Gruppe gehören, umfassend:
• Mittel zum Aktivieren einer oder mehrerer Farben, die von mindestens einer Lichtquelle im Inneren des mindestens einen zu sichernden Elements emittiert werden,
• Mittel zum intermittierenden Aktivieren von mindestens einer Lichtquelle im Inneren des mindestens einen zu sichernden Elements,
• eine Kombination der Mittel zum Aktivieren.

7. System zur Sicherung nach Anspruch 1, **dadurch gekennzeichnet, dass** es Mittel zur Hintergrundbeleuchtung von mindestens einem Teil des mindestens einen zu sichernden Elements aufweist, wobei die Mittel zur Hintergrundbeleuchtung zu der Gruppe gehören, umfassend:
• einen Lichtleiter um mindestens einen Teil des zu sichernden Elements,
• eine Struktur, bestehend aus einem Kunststoffteil, das mit mindestens einer Lichtquelle im Inneren des mindestens einen zu sichernden Elements verbunden ist, das auf einem weißen, stoßfesten Teil angebracht ist,
• eine Struktur, bestehend aus einem lichtstreuenden Teil, das mit mindestens einer Lichtquelle im Inneren des mindestens einen zu sichernden Elements verbunden ist, aus einer mattierten lichtstreuenden Folie und aus einem stoßfesten Schutzteil,
• eine Lichtquelle, die unter mindestens einer Taste des zu sichernden Elements angeordnet ist, wenn dieses einer Tastatur entspricht.

8. Verfahren zur Sicherung mindestens eines Elements einer nicht überwachten Servicesäule, das zu sicherndes Element genannt wird, wobei das Verfahren aufweist:
• einen Schritt des Sicherns (30) des mindestens einen zu sichernden Elements, der mindestens ein Interaktionsmittel (120) mit mindestens einem Benutzer der nicht überwachten Servicesäule bereitstellt, wobei Schritt des Sicherns (12) aufweist:
∘ das Steuern mindestens eines Parameters der Hintergrundbeleuchtung von mindestens einem Teil des mindestens einen zu sichernden Elements,
∘ das Senden mindestens eines Signals, das mindestens eine Nachricht in Bezug auf den Parameter der Hintergrundbeleuchtung trägt, die dazu bestimmt ist, auf einem Bildschirm der nicht überwachten Servicesäule angezeigt zu werden, wobei die mindestens eine Nachricht dem mindestens einen Interaktionsmittel entspricht,
• einen Schritt des Erfassens (31) einer Anomalie in Abhängigkeit von dem mindestens einen Interaktionsmittel, wobei der Schritt des Erfassens einer Anomalie einen Alarm abgibt, wenn vor Ablauf einer vorgegebenen Zeit keine Antwort auf die angezeigte Nachricht erhalten wird oder wenn eine auf die angezeigte Nachricht erhaltene Antwort negativ ist,
• wobei das Verfahren **dadurch gekennzeichnet ist, dass** es einen Schritt des Überprüfens einer erfassten Anomalie aufweist, wobei der Schritt des Überprüfens aufweist:
∘ das Steuern einer Lichtquelle außerhalb des Systems zur Sicherung,
∘ das Analysieren einer Lichtintensität, das eine Validierungsentscheidung der erfassten Anomalie trifft, wenn die analysierte Lichtintensität nicht einer Referenzlichtintensität entspricht.

9. Computerprogrammprodukt, das Programmcodebefehle für das Ausführen eines Verfahrens nach Anspruch 8 aufweist, wenn das Programm auf einem Computer ausgeführt wird.

10. Computerlesbares, nicht-transientes Speichermedium, das ein Computerprogramm nach Anspruch 9 speichert.

## Claims

1. System for protecting at least one element (10, 11) of an unattended transaction terminal, referred to as the element to be protected, said system comprising:
- means (12) for protecting said at least one element to be protected, delivering at least one means (120) of interaction with at least one user of said unattended transaction terminal, said protection means comprising:
- means for controlling at least one parameter for backlighting of at least part of said at least one element to be protected;
- means for emitting at least one signal carrying at least one message, relating to said backlighting parameter, intended to be displayed on a screen of said unattended transaction terminal, said at least one message corresponding to said at least one interaction means;
- means (13) for detecting an abnormality according to said at least one interaction means, said abnormality detection means delivering an alert if no response to said displayed message is received before the expiry of a predetermined time or if a response received to said displayed message is negative,
said system being **characterised in that** it comprises means for checking a detected abnormality, comprising the following means:
- means for controlling a light source external to said protection system;
- means for analysing a light intensity, delivering a decision to validate said detected abnormality if said light intensity analysed is not in accordance with a reference light intensity.

2. Protection system according to claim 1, **characterised in that** said protection means comprise:
- means for controlling a light source external to said protection system, a switching on of said external light source corresponding to said interaction means;
- means for analysing a light intensity,
and **in that** said means for detecting abnormality deliver an alert if the light intensity analysed is not in accordance with a reference light intensity.

3. Protection system according to claim 1, **characterised in that** said at least one element to be protected is a keypad or a card reader.

4. Protection system according to any of claims 1 to 3, **characterised in that** it comprises means for receiving at least one triggering command to trigger said protection means, coming from a module for protecting said unattended transaction terminal.

5. Protection system according to claim 4, **characterised in that** said means for receiving a triggering command and/or said protection means are implemented in said at least one element to be protected.

6. Protection system according to claim 1, **characterised in that** said means for controlling at least one backlighting parameter belong to the group comprising:
- means for activating one or more colours emitted by at least one light source internal to said at least one element to be protected;
- means for the intermittent activation of at least one light source internal to said at least one element to be protected;
- a combination of said activation means.

7. Protection system according to claim 1, **characterised in that** it comprises means for backlighting at least part of said at least one element to be protected, said backlighting means belonging to the group comprising:
- a light guide around at least part of said element to be protected;
- a structure composed of a plastic part, connected to at least one light source internal to said at least one element to be protected, placed on an impact-resistant white part;
- a structure composed of a light-diffusing part, connected to at least one light source internal to said at least one element to be protected, a light-diffusing frosted film and an impact-resistant protective part;
- a light source disposed under at least one key of said element to be protected, when the latter is a keypad.

8. Method for protecting at least one element of an unattended transaction terminal, referred to as the element to be protected, said method comprising:
- a step (30) of protecting said at least one element to be protected, delivering at least one means (120) of interaction with at least one user of said unattended transaction terminal, said protection step comprising:
- the control of at least one parameter for backlighting of at least part of said at least one element to be protected;
- the emission of at least one signal carrying at least one message, relating to said backlighting parameter, intended to be displayed on a screen of said unattended transaction terminal, said at least one message corresponding to said at least one interaction means;
- a step (31) of detecting an abnormality according to said at least one interaction means, said abnormality detection step delivering an alert if no response to said displayed message is received before the expiry of a predetermined time or if a response received to said displayed message is negative;
said method being **characterised in that** it comprises a step for checking a detected abnormality, said step for checking comprising:
- the control of a light source external to said protection system;
- the analysis of a light intensity, delivering a decision to validate said detected abnormality if said light intensity analysed is not in accordance with a reference light intensity.

9. Computer program product, comprising program code instructions for implementing a method according to claim 8, when said program is executed on a computer.

10. Computer-readable and non-transient storage medium, storing a computer program product according to claim 9.
